(19) Europäisches Patentamt / European Patent Office / Office européen des brevets

(11) **EP 4 682 787 A1**

(12) **EUROPEAN PATENT APPLICATION**
published in accordance with Art. 153(4) EPC

(43) Date of publication:
**21.01.2026 Bulletin 2026/04**

(21) Application number: **23927467.3**

(22) Date of filing: **15.03.2023**

(51) International Patent Classification (IPC):
**G06N 99/00** (2019.01)    **G06N 10/60** (2022.01)

(52) Cooperative Patent Classification (CPC):
**G06N 10/60; G06N 99/00**

(86) International application number:
**PCT/JP2023/010130**

(87) International publication number:
**WO 2024/189847 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **NEC Corporation**
**108-8001 Tokyo (JP)**

(72) Inventors:
• **SUSA Yuki**
**Tokyo 108-8001 (JP)**
• **YATABE Akihiro**
**Tokyo 108-8001 (JP)**

(74) Representative: **Betten & Resch**
**Patent- und Rechtsanwälte PartGmbB**
**Maximiliansplatz 14**
**80333 München (DE)**

(54) **PROCESSING DEVICE, PROCESSING METHOD, AND RECORDING MEDIUM**

(57) This processing device comprises: hardware configured such that all combinations of a specific number of two or more logical bits, which are selectable from a group of logical bits constituting a problem, are mapped to different physical bits; and application means for applying, to the hardware when inputting an energy function of the problem, domain wall representation data instead of one hot representation data representing a part or all of the energy function.

## Fig.13

EP 4 682 787 A1

## Description

Technical Field

The present disclosure relates to a processing device, a processing method, and a recording medium.

Background Art

In recent years, quantum computers have been developed. PTL 1 discloses a technique related to a quantum computer as a related technique.

Citation List

Patent Literature

PTL 1: JP 2021-536610 A

Summary of Invention

Technical Problem

By the way, it is desirable to solve the combinatorial optimization problem with less hardware resources based on an optimization device having a predetermined graph structure such as an LHZ model. Therefore, there is a demand for a technology capable of achieving processing with less hardware resources configured based on an optimization device having a predetermined graph structure such as an LHZ model.
An object of each aspect of the present disclosure is to provide a processing device, a processing method, and a recording medium that can solve the above problems.

Solution to Problem

According to an aspect of the present disclosure, a processing device includes hardware configured in such a way that all combinations of a specific number of two or more logical bits, which are selectable from a group of logical bits constituting a problem, are mapped to different physical bits, and an application means for applying, to the hardware when inputting an energy function of the problem, domain wall expression data instead of one-hot expression data representing a part or all of the energy function.
According to another aspect of the present disclosure, a processing method executed by a processing device having hardware, the hardware being configured in such a way that all combinations of a specific number of two or more logical bits, which are selectable from a group of logical bits constituting a problem, are mapped to different physical bits, the method including applying, to the hardware when inputting an energy function of the problem, domain wall expression data instead of one-hot expression data representing a part or all of the energy function.
According to another aspect of the present disclosure, a recording medium having stored therein a program for causing a computer of a processing device having hardware, the hardware being configured in such a way that all combinations of a specific number of two or more logical bits, which are selectable from a group of logical bits constituting a problem, are mapped to different physical bits, to execute applying, to the hardware when inputting an energy function of the problem, domain wall expression data instead of one-hot expression data representing a part or all of the energy function.

Advantageous Effects of Invention

According to each aspect of the present disclosure, it is possible to achieve processing with less hardware resources configured based on an optimization device having a predetermined graph structure such as an LHZ model.

Brief Description of Drawings

[Fig. 1] Fig. 1 is a diagram illustrating an example of a graph representing a relationship of interaction between physical bits in hardware configured based on an LHZ model.

[Fig. 2] Fig. 2 is a diagram illustrating an example of correspondence between a one-hot expression and a domain wall expression.

[Fig. 3] Fig. 3 is a diagram illustrating a relationship between a function represented by the one-hot expression and a function represented by the domain wall expression.

[Fig. 4] Fig. 4 is a diagram illustrating an example of a configuration of a processing device according to an example embodiment of the present disclosure.

[Fig. 5] Fig. 5 is a diagram illustrating an example of comparison of the number of correlations between logical bits in the one-hot expression and the domain wall expression in a traveling salesman problem.

[Fig. 6] Fig. 6 is a diagram illustrating a difference in the number of correlations in the comparison illustrated in Fig. 5.

[Fig. 7] Fig. 7 is a diagram illustrating an example of comparison of the number of physical bits required for an LHZ model in the one-hot expression and the domain wall expression in a traveling salesman problem.

[Fig. 8] Fig. 8 is a diagram illustrating a difference in the number of physical bits in the comparison illustrated in Fig. 7.

[Fig. 9] Fig. 9 is a diagram illustrating an example of a processing flow of a processing device 1 according to an example embodiment of the present disclosure.

[Fig. 10] Fig. 10 is a diagram illustrating an example of a relationship between workers and contents in a personnel allocation problem.

[Fig. 11] Fig. 11 is a diagram illustrating an example of a configuration of a hardware processing unit 40 according to an example embodiment of the present disclosure.

[Fig. 12] Fig. 12 is a diagram illustrating a processing device with a minimum configuration according to an example embodiment of the present disclosure.

[Fig. 13] Fig. 13 is a diagram illustrating an example of a processing flow of a processing device having a minimum configuration.

[Fig. 14] Fig. 14 is a schematic block diagram illustrating a configuration of a computer according to at least one example embodiment.

Example Embodiment

Hereinafter, example embodiments will be described in detail with reference to the drawings.

<Example embodiment>

(Underlying knowledge)

First, in order to facilitate understanding of the processing device 1 according to an example embodiment of the present disclosure to be described later, underlying knowledge will be described. Here, knowledge as a premise will be described while illustrating a traveling salesman problem as an example of the combinatorial optimization problem.

The traveling salesman problem is a problem of obtaining a way of visiting with the lowest cost (for example, distance) under a condition that there are a plurality of cities, each city is visited only once, and two or more cities cannot be visited at the same time.

Expression (1) shows the condition of the traveling salesman problem by an energy function H. It is known that the traveling salesman problem can be described as Expression (1) in a QUBO(Quadratic Unconstrained Binary Optimization) format. The energy function H may also be referred to as a Hamiltonian.

[Math. 1]

$$H = \sum_{t=1}^{N}\sum_{i=1}^{N}\sum_{j=1}^{N} d_{ij}x_{i,t}x_{j,t+1} + A\sum_{i=1}^{N}\left(\sum_{t=1}^{N} x_{i,t} - 1\right)^2$$

$$+ B\sum_{t=1}^{N}\left(\sum_{i=1}^{N} x_{i,t} - 1\right)^2 \quad \cdot \cdot \cdot (1)$$

In Expression (1), d represents a distance between a certain city and another city. t represents time. i represents a city number. x is a variable that takes 0 or 1. For example, x(i, t) = 1 indicates that the user visits the city with the city number i at time t. A character in parentheses after x is relevant to a subscript in Expression (1). Hereinafter, for variables other than x, the subscript in the expression is described as the character in parentheses.

The first term on the right side of Expression (1) indicates the cost (for example, the total distance) in a certain way of visiting. The second term on the right side of Expression (1) indicates that each city is visited only once. The third term on the right side of Expression (1) indicates that two or more cities cannot be visited at the same time.

A desired solution can be obtained by setting a combination in which a certain x(i, t) = 1 and another x(i, t) = 0 so as to be a combination of variables that minimize the energy function H.

The second term on the right side of Expression (1) means that only one of 1 to N at time t is 1, and the others are 0. In the case of such a combination, the second term is minimized. In this way, an expression in which only one of 1 to N is 1 and the others are 0 is called one-hot expression.

Expression (1) includes multiplication of various variables. That is, in Expression (1), various variables have some correlation. Each of the various variables represents a logical bit. Therefore, in a case where Expression (1) itself is to be solved by some hardware, a plurality of physical bits in the hardware need to have a correlation similar to that of the logical bits. However, since hardware that performs general calculation often has a configuration in which physical bits are calculated based on a graph (for example, an LHZ (Lechner-Hauke-Zoller) model to be described later) represented on a two-dimensional plane, it is difficult to three-dimensionally intersect wiring lines, or it is difficult to connect physical bits located far away from each other, so that the number of correlated physical bits is limited. On the other hand, when a plurality of physical bits are to be correlated with each other similarly to logical bits, a configuration of hardware for the correlation becomes complicated and large. For this reason, it is usually difficult to prepare hardware that causes a plurality of physical bits to have a correlation similar to that of logical bits, which is not realistic. Therefore, by configuring all the combinations of the specific number of two or more logical bits selectable from a group of logical bits constituting the problem so as to be mapped to different physical bits, complexity of the correlation between the physical bits is simplified, and a graph structure that is more easily hardware-implemented can be obtained. One example of the graph structure is an LHZ model. In the LHZ model, the complexity of the correlation between the physical bits is simplified, so that three-dimensional wiring and long-distance wiring between the physical bits can be made unnecessary.

The following description will be made by exemplifying hardware configured based on the LHZ model as a specific example of hardware.

In general, the energy function H can be expressed as Expression (2).

[Math. 2]

$$H = - \sum_{1 \leq i < j}^{M} J_{ij} \sigma_i \sigma_j - \sum_{j=1}^{M} h_j \sigma_j$$

$$= - \sum_{1 \leq i < j}^{M} J_{ij} \sigma_i \sigma_j - \sum_{j=1}^{M} J_{0j} \sigma_0 \sigma_j = - \sum_{0 \leq i < j}^{M} J_{ij} \sigma_i \sigma_j \quad \cdots (2)$$

In Expression (2), when σ(i) = ±1, h(j) = J(0, j), and σ(0) = 1, Expression (2) can be transformed into Expression (1). That is, Expression (1) can be transformed into Expression (2). Then, after deformation of such an equation is performed, conversion is performed as J(i, j) = J(k) and σ(i)σ(j) = σ_bar(k). Then, by adding the product of the four variables, the general energy function H expressed by Expression (2) can be expressed as the energy function H (LHZ) by the LHZ model as in Expression (3). "_bar" represents ~ (tilde).

[Math. 3]

$$H_{LHZ} = - \sum_{k=1}^{(M+1)M} J_k \tilde{\sigma}_k - C \sum_{l=1}^{M(M-1)} \tilde{\sigma}_{l,n} \tilde{\sigma}_{l,s} \tilde{\sigma}_{l,e} \tilde{\sigma}_{l,w} \quad \cdots (3)$$

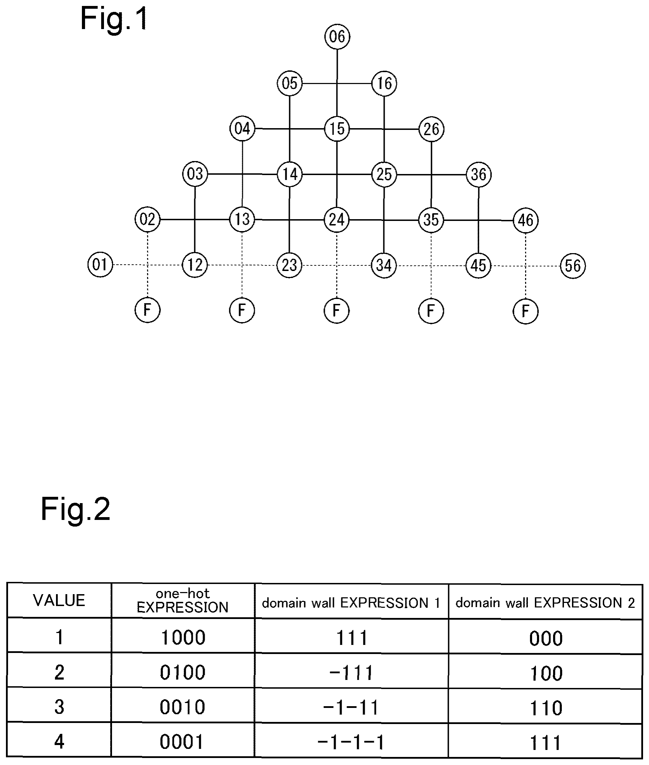

Fig. 1 is a diagram illustrating an example of a graph representing a relationship of interaction between physical bits in hardware configured based on an LHZ model. When the relationship of the interaction between the physical bits in the energy function H (LHZ) expressed as Expression (3) is expressed as a graph, the graph illustrated in Fig. 1 is obtained. The numerical value in the graph illustrated in Fig. 1 represents one physical bit of σ_bar(k) and is relevant to the i number and the j number in σ(i)σ(j) of Expression (2). F in the graph illustrated in Fig. 1 represents a fixed physical bit. In the graph illustrated in Fig. 1, four physical bits are connected at the tip of a cross and interact with each other, but there are only three physical bits at the bottom of the graph. Therefore, a fixed physical bit F is connected to the bottom of the graph. F is 1. By setting F to 1, even in a case where four multiplication of physical bits connected at the tip of the cross is performed, the multiplication result is the same as the multiplication results of the three physical bits at the bottom of the graph, which is convenient without affecting the multiplication result.

In the graph illustrated in Fig. 1, there is no correlation between distant bits, and there is only a correlation between adjacent bits close to each other. Therefore, as described above, by changing the energy function H to the energy function H(LHZ) by the LHZ model, the hardware having the configuration of only the correlation between the adjacent physical bits can be physically mounted. When the number of logical bits is M and the hardware is represented by the graph illustrated in Fig. 1, the number of physical bits is (M + 1) M/2.

In contrast to the one-hot expression described above, there is an expression called a domain wall expression. Fig. 2 is a diagram illustrating an example of correspondence between the one-hot expression and the domain wall expression. In the domain wall expression, when the one-hot expression is represented by two values of 0 and 1, a location where 1 exists is represented by a boundary between the two values used by the domain wall expression.

For example, as illustrated in Fig. 2, when the domain wall expression is represented by two values of -1 and 1, and the one-hot expression is "0100", the domain wall expression relevant to the one-hot expression "0100" is "-111". That is, the domain wall expression is an expression in which 1 in the one-hot expression exists third from the right, which is the lower bit, between -1 and 1. For example, as illustrated in Fig. 2, in a case where the domain wall expression is represented by two values of 1 and 0, and the one-hot expression is "1000", the domain wall expression relevant to the one-hot expression "1000" is "000". That is, the domain wall expression is an expression in which 1 in the one-hot expression exists fourth from the right, which is the lower bit, between 1 and 0 (however, in this case, 1 of the high-order bit is omitted). In this way, the domain wall expression can indicate equivalent information with one bit less information than the one-hot expression.

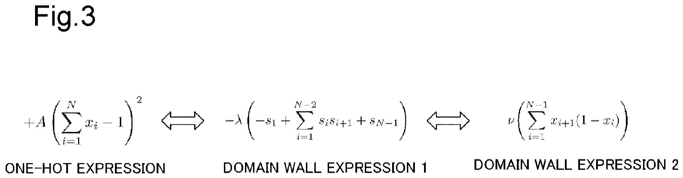

Fig. 3 is a diagram illustrating a relationship between a function represented by the one-hot expression and a function represented by the domain wall expression. In Fig. 3, a function by the one-hot expression (binary of 0 and 1) is illustrated on the left side, a function by the domain wall expression 1 (binary of -1 and 1) is illustrated in the center, and a function by the domain wall expression 2 (binary of 1 and 0) is illustrated on the right side. When the function by the one-hot expression (binary of 0 and 1) is expressed by the square of the value obtained by subtracting 1 from the sum, conversion as illustrated in Fig. 3 can be performed between the function by the one-hot expression (binary of 0 and 1), the function by the domain wall expression 1 (binary of -1 and 1), and the function by the domain wall expression 2 (binary of 1 and 0).

When the energy function H by the one-hot expression of the traveling salesman problem is rewritten as the energy function H by the domain wall expression using the relationship illustrated in Fig. 3, Expression (4) is obtained.

[Math. 4]

$$H = \sum_{t=1}^{N}\sum_{i=1}^{N}\sum_{j=1}^{N}\frac{d_{ij}}{4}\left(s_{i,t} - s_{i,t-1}\right)\left(s_{j,t+1} - s_{j,t}\right) - \lambda\sum_{t=1}^{N}\sum_{i=1}^{N}s_{i,t}s_{i,t-1}$$

$$+ B\sum_{t=1}^{N}\left(\sum_{i=1}^{N}\frac{1}{2}\left(s_{i,t} - s_{i,t-1}\right) - 1\right)^{2} \quad \cdot\cdot\cdot(4)$$

Here, x(i, t) = (s(i, t) - s(i, t - 1))/2, s(i) {1,..., N - 1} = ±1, s(i, 0) = -1, s(i, N) = 1, and s(i, N + 1) = s(i, 1) + 2. The above is the description of the underlying knowledge.

Next, a processing device 1 according to an example embodiment of the present disclosure will be described. In a case where an energy function is input to hardware configured based on an LHZ model, the processing device 1 applies domain wall expression data instead of one-hot expression data representing a part or all of the energy function, and obtains an optimal solution of a combinatorial optimization problem represented by the energy function based on quantum annealing or QAOA (quantum approximate optimization algorithm). As described above, when the number of variables relevant to logical bits and the number of correlations between variables are large, the number of physical bits and the number of correlations between physical bits are also large, and it becomes difficult to achieve hardware constituting the physical bits. The processing device 1 is a device capable of achieving processing with less hardware resources configured based on an optimization device having a predetermined graph structure such as an LHZ model.

(Configuration of processing device)

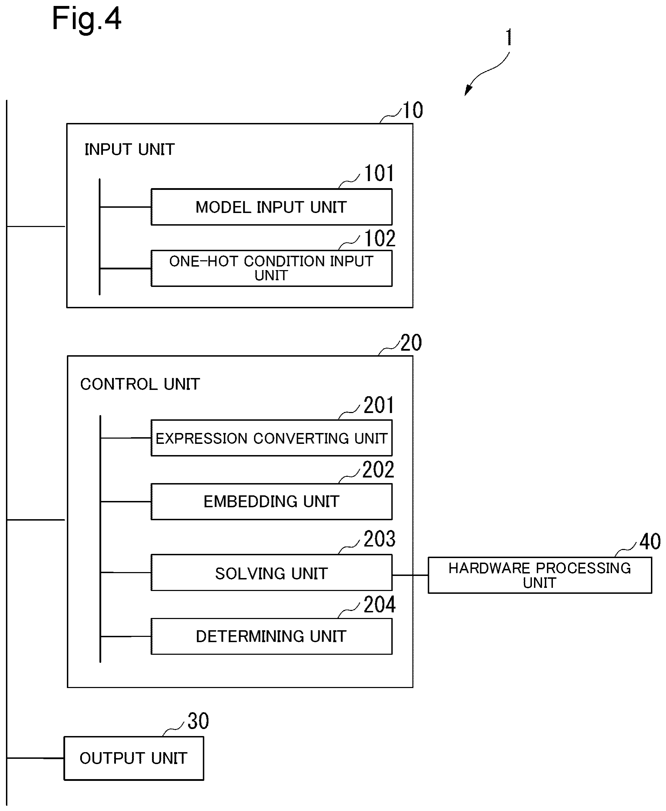

Fig. 4 is a diagram illustrating an example of a configuration of the processing device 1 according to an example embodiment of the present disclosure. As illustrated in Fig. 4, the processing device 1 includes an input unit 10, a control unit 20, an output unit 30, and a hardware processing unit 40 (an example of hardware).

As illustrated in Fig. 4, the input unit 10 includes a model input unit 101 and a one-hot condition input unit 102. The model input unit 101 receives the Ising model. Examples of the Ising model include a model representing a combinatorial optimization problem including a variable (for example, $J(i, j)$, $h(j)$, and the like). The one-hot condition input unit 102 explicitly receives a set of variables included in the one-hot expression based on the Ising model received by the model input unit 101. The Ising model may be an expression represented by the one-hot expression or a variable group included in the one-hot expression. That is, the one-hot condition input unit 102 may receive the expression represented by the one-hot expression or the Ising model represented by the variable group included in the one-hot expression. The variables included in the Ising model are a combination of the constraint condition and the objective function, and are input to the hardware processing unit 40.

As illustrated in Fig. 4, the control unit 20 includes an expression converting unit 201 (an example of an application means), an embedding unit 202, a solving unit 203, and a determining unit 204 (an example of a determining means). In a case where the determining unit 204 determines that it is better for the expression converting unit 201 to convert the model from the one-hot expression to the domain wall expression, the expression converting unit 201 converts the model from the one-hot expression to the domain wall expression. For example, in a case where an energy function is input to hardware configured based on the LHZ model, the expression converting unit 201 applies domain wall expression data instead of one-hot expression data representing a part or all of the energy function.

The embedding unit 202 sets variables in the model converted into the domain wall expression so as to match the quantum annealing machine, which is hardware configured based on the LHZ model. The solving unit 203 obtains a solution of a model representing the combinatorial optimization problem in which variables are set, based on a predetermined operation performed by the hardware processing unit 40.

The determining unit 204 determines whether it is better for the expression converting unit 201 to convert the model from the one-hot expression to the domain wall expression. That is, the determining unit 204 determines whether it is better to apply the domain wall expression data instead of the one-hot expression data. For example, the determining unit 204 determines whether it is better to apply the domain wall expression data instead of the one-hot expression data based on the number of correlations between variables in a case where the one-hot expression data is applied and the number of correlations between variables in a case where the domain wall expression data is applied instead of the one-hot expression data. The domain wall expression data can be applied instead of the one-hot expression data only to any one of the terms representing the energy function H. Therefore, in a case where there are a plurality of terms represented by the one-hot expression data in the energy function H, the determining unit 204 applies the domain wall expression data to each of the plurality of terms represented by the one-hot expression data. Specifically, in a case where the number of correlations between variables in a case where the one-hot expression data is applied is smaller than the number of correlations between variables in a case where the domain wall expression data is applied, the determining unit 204 determines that it is better not to apply the domain wall expression data instead of the one-hot expression data. Specifically, in a case where the number of correlations between variables in a case where the one-hot expression data is applied is larger than the number of correlations between variables in a case where the domain wall expression data is applied, the determining unit 204 determines that it is better to apply the domain wall expression data instead of the one-hot expression data.

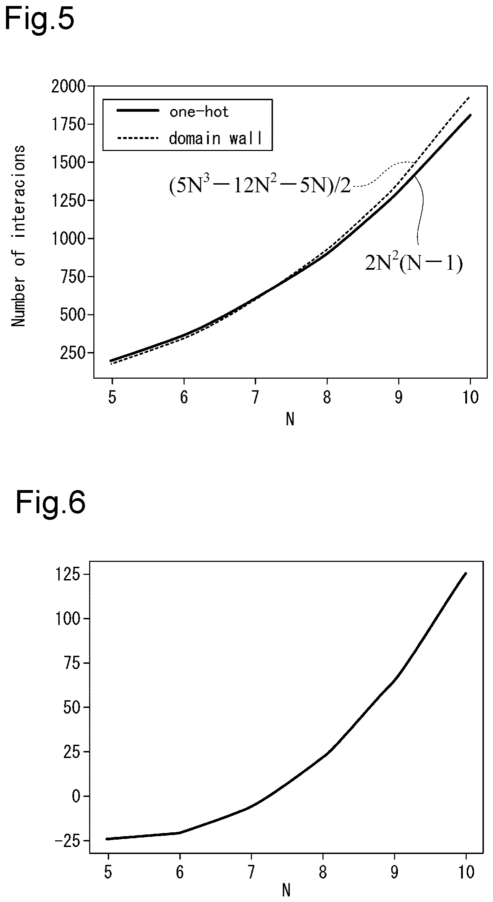

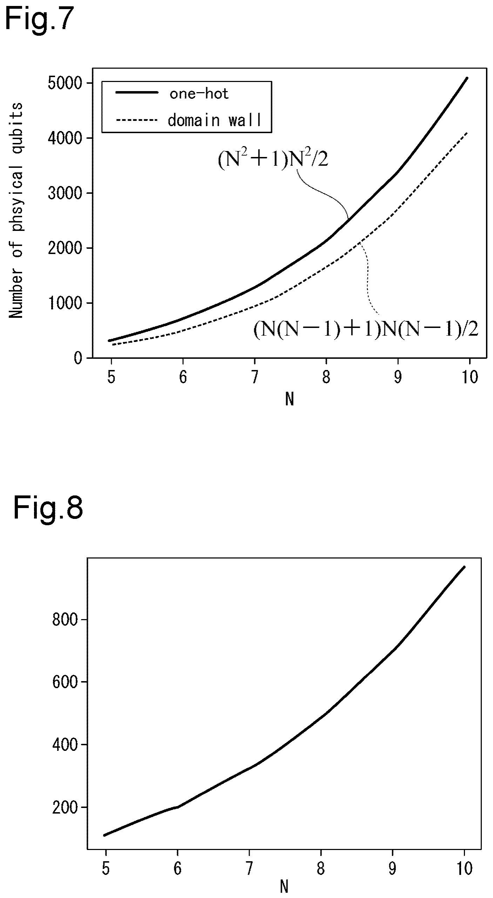

Fig. 5 is a diagram illustrating an example of comparison of the number of correlations between logical bits in the one-hot expression and the domain wall expression in the traveling salesman problem. Fig. 6 is a diagram illustrating a difference in the number of correlations in the comparison illustrated in Fig. 5. Fig. 7 is a diagram illustrating an example of comparison of the number of physical bits required for the LHZ model in the one-hot expression and the domain wall expression in the traveling salesman problem. Fig. 8 is a diagram illustrating a difference in the number of physical bits in the comparison illustrated in Fig. 7. In Figs. 5 to 8, N represents the number of cities visited in the traveling salesman problem.

As described above, when the domain wall expression is used instead of the one-hot expression, the logical bit can be reduced by one bit. However, as illustrated in Figs. 5 and 6, when the number of cities N visited is 8 or more, the number of correlations between logical bits is larger in the case of applying the domain wall expression than in the case of applying the one-hot expression. As the number of correlations between logical bits increases, it becomes more difficult to search for a solution. That is, it is difficult to obtain the solution in a short time. For example, in a case where a fully connected annealer is assumed as the hardware processing unit 40, it may not be clear which one of a case where the traveling salesman problem is applied with the one-hot expression having a large number of required bits and a case where the domain wall expression having a small number of required bits is applied is more efficient in searching for a solution (in a shorter time). In a case where the one-hot expression is applied, the number of parameters to be adjusted is one, but in a case where the domain wall expression is applied, the number of parameters to be adjusted is two. Therefore, it takes time to adjust to obtain a more accurate solution. Therefore, even if the domain wall expression is applied, the solution search time is not necessarily shortened.

However, as can be seen from Figs. 7 and 8, in a case where the domain wall expression is used instead of the one-hot expression in the LHZ model, the required number of physical bits is always smaller in a case where the domain wall expression is applied than in a case where the one-hot expression is applied. Therefore, the determining unit 204 may determine whether it is better to use the domain wall expression instead of the one-hot expression based on the number of correlations between the logical bits. (That is, in a case where the purpose is only to reduce the number of physical bits required for the LHZ model, the determining unit 204 is unnecessary.)

The output unit 30 outputs the solution of the model obtained by the control unit 20 to the outside of the processing device 1. The hardware processing unit 40 executes a predetermined calculation using the quantum superposition state. For example, the hardware processing unit 40 obtains an optimal solution of the combinatorial optimization problem represented by an energy function based on quantum annealing or QAOA (quantum approximate optimization algorithm). Examples of the hardware processing unit 40 include a gate type quantum computer based on QAOA (quantum approximate optimization algorithm), a quantum annealing machine, and the like.

In the processing device 1, the processing performed by the input unit 10, the control unit 20, the output unit 30, and the hardware processing unit 40 is not limited to the above-described processing. For example, in the processing device 1, the input unit 10, the control unit 20, the output unit 30, and the hardware processing unit 40 may perform processing described below.

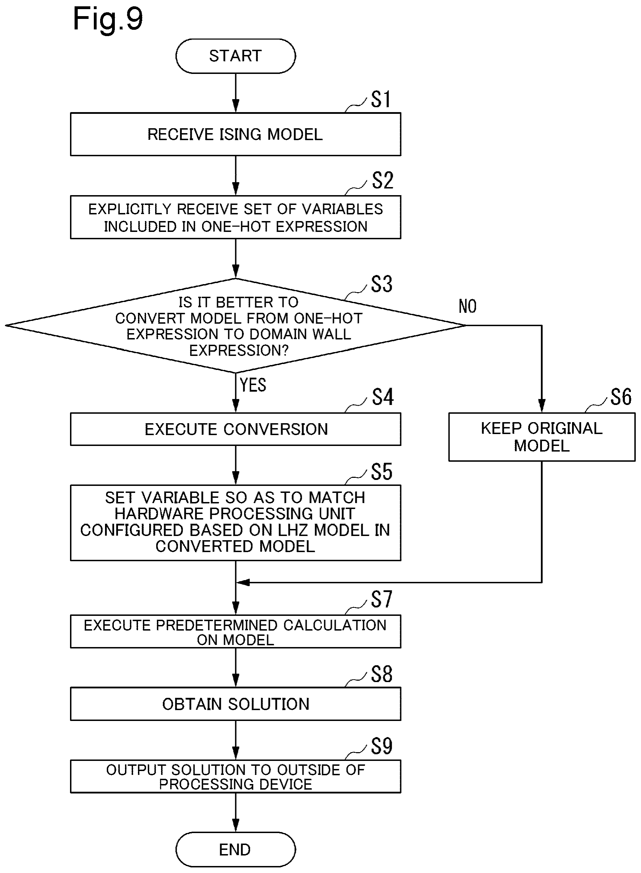

Fig. 9 is a diagram illustrating an example of a processing flow of the processing device 1 according to an example embodiment of the present disclosure. Here, as a specific example of the combinatorial optimization problem, processing performed by the processing device 1 will be described with reference to Fig. 9 while illustrating the traveling salesman problem.

The model input unit 101 receives the Ising model (step S1). The one-hot condition input unit 102 explicitly receives a set of variables included in the one-hot expression based on the Ising model received by the model input unit 101 (step S2).

The determining unit 204 determines whether it is better for the expression converting unit 201 to convert the model from the one-hot expression to the domain wall expression (step S3).

When the determining unit 204 determines that it is better for the expression converting unit 201 to convert the model from the one-hot expression to the domain wall expression (YES in step S3), the expression converting unit 201 converts the model from the one-hot expression to the domain wall expression (step S4). Then, the embedding unit 202 sets a variable so as to match the hardware processing unit 40 configured based on the LHZ model in the model converted into the domain wall expression (step S5).

When the determining unit 204 determines that it is better for the expression converting unit 201 not to convert the model from the one-hot expression to the domain wall expression (NO in step S3), the expression converting unit 201 keeps the model of the one-hot expression (step S6).

The hardware processing unit 40 performs a predetermined operation on the model using the quantum superposition state (step S7). The solving unit 203 obtains a solution of a model representing the combinatorial optimization problem in which variables are set, based on a predetermined operation performed by the hardware processing unit 40 (step S8).

The output unit 30 outputs the solution of the model obtained by the control unit 20 to the outside of the processing device 1 (step S9).

(Advantages)

The processing device 1 according to the first example embodiment of the present disclosure has been described above. In the processing device 1, in a case where an energy function is input to hardware configured based on a Lechner-Hauke-Zoller (LHZ) model, the expression converting unit 201 (an example of an application means) applies domain wall expression data instead of one-hot expression data representing a part or all of the energy function.

With this processing device 1, it is possible to achieve processing with less hardware resources configured based on an optimization device having a predetermined graph structure such as an LHZ model.

<Modification of example embodiment>

Next, a processing device 1 according to a modification of the example embodiment of the present disclosure will be described. In the example embodiment of the present disclosure, the processing of the processing device 1 has been described using the combinatorial optimization problem as the traveling salesman problem. However, in a modification of the example embodiment of the present disclosure, the processing device 1 may obtain a solution for the personnel allocation problem.

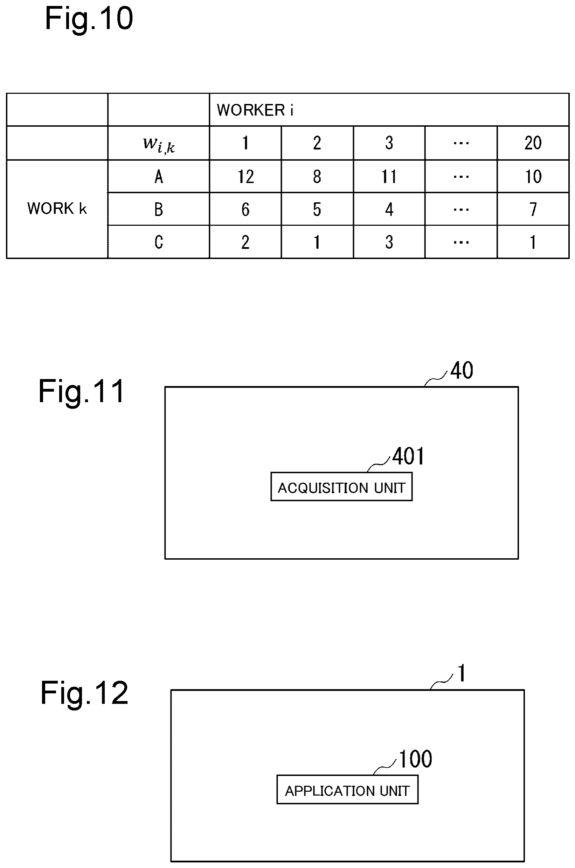

For example, it is assumed that there are 20 workers and three types of work A, B, and C. A workload that can be handled per unit time is determined for each worker, and the workload can be expressed as $w(i, k)$. Fig. 10 is a diagram illustrating an example of a relationship between workers and contents in the personnel allocation problem. The relationship illustrated in Fig. 10 is a table summarizing the above-described preconditions. In the example shown here, it is assumed that the workload w(i, k) is not 0. A variable of 0 or 1 indicating that a worker i executes the work k is represented as x(i, k).

In this case, the energy function H that maximizes the norm satisfaction rate can be expressed as Expression (5).

[Math. 5]

$$H = -C_1 \sum_{k=1}^{3} S_k + C_2 \sum_{i=1}^{20} \left( \sum_{k=1}^{3} x_{i,k} - 1 \right)^2 \quad \cdots (5)$$

However, Sk in Expression (h5) is expressed as Expression (6).

[Math. 6]

$$S_k = \frac{1}{w_k} \left( t \sum_{i=1}^{20} w_{i,k} x_{i,k} \right) \quad \cdots (6)$$

The one-hot expression is applied to Expression (5). Here, when a term of dispersion is added as a condition for finishing a plurality of operations as uniformly as possible (that is, in order to avoid that one work is completed and another work is not completed at all), the energy function H can be expressed as Expression (7) by the one-hot expression.

[Math. 7]

$$H = -C_1 \left( \sum_{k=1}^{3} S_k \right)^2 + C_2 \left( \frac{1}{3} \sum_{k=1}^{3} S_k^2 - \left( \frac{1}{3} \sum_{k=1}^{3} S_k \right)^2 \right)$$

$$+ C_3 \sum_{i=1}^{20} \left( \sum_{k=1}^{3} x_{i,k} - 1 \right)^2 \quad \cdots (7)$$

Expression (7) can be changed from the one-hot expression to the domain wall expression, and the variables can be reduced similarly to the traveling salesman problem. As a result, the number of variables can be reduced from NM to N(M - 1). Specifically, by x(i, k) = (s(i, k) - s(i, k - 1))/2, the variable x(i, k) (k = 1, 2, 3) in the one-hot expression can be rewritten to the variable s(i, k) (k = 1, 2) in the domain wall expression. As a result, the logical variable can be reduced from 20 × 3 = 60 to 20 × 2 = 40. Accordingly, the number of physical bits in the hardware of the LHZ model can be reduced from 60 × 61/2 = 1830 to 40 × 41/2 = 820.

(Advantages)

The processing device 1 according to the modification of the example embodiment of the present disclosure has been described above. With this processing device 1, it can be seen that the processing device 1 according to the example embodiment of the present disclosure is also effective for the combinatorial optimization problem other than the traveling salesman problem.

In the above-described example embodiments and modifications of the example embodiments of the present disclosure, the processing device 1 has been described by exemplifying hardware configured based on the LHZ model as a specific example of hardware. However, in another example embodiment of the present disclosure, the hardware is not limited to hardware configured based on the LHZ model. In another example embodiment of the present disclosure, the hardware may be hardware of another configuration that performs conversion to make all combinations of a specific number of logical bits mapped to physical bits.

In the above-described example embodiments and modifications of the example embodiments of the present disclosure, the processing device 1 has been described as including the application means for applying the domain wall expression data instead of the one-hot expression data. However, in another example embodiment of the present disclosure, the domain wall expression data may be applied from the beginning instead of the one-hot expression data. Fig. 11 is a diagram illustrating an example of a configuration of the hardware processing unit 40 according to another example embodiment of the present disclosure. In the processing device 1, the hardware processing unit 40 that executes a predetermined operation on the model using the quantum superposition state may include an acquisition unit 401 (an example of an acquisition means) that has a configuration matching the number of bits of domain wall expression data included in the energy function and acquires the domain wall expression data when the energy function of the problem is input to hardware configured such that all combinations of a specific number of two or more logical bits, which are selectable from a group of logical bits constituting the problem, are mapped to different physical bits.

An optimization device of a type in which all correlations of combinations of a specific number of two or more logical bits are considered from the beginning as exemplified in the LHZ model has an advantage of being strong against a problem of a complicated graph structure having many mappings between logical bits. The problem defined by the domain wall expression tends to increase the number of correlations between the logical bits, as described in Figs. 5 and 6. However, for the above reason, an optimization device having a predetermined graph structure such as an LHZ model can solve the problem of the domain wall expression with relatively few hardware resources.

A processing device 1 having a minimum configuration according to an example embodiment of the present disclosure will be described. Fig. 12 is a diagram illustrating the processing device 1 having a minimum configuration according to an example embodiment of the present disclosure. The processing device 1 having a minimum configuration according to the example embodiment of the present disclosure includes an application unit 100 (an example of an application means). In a case where an energy function is input to hardware configured based on a Lechner-Hauke-Zoller (LHZ) model, the application unit 100 applies domain wall expression data instead of one-hot expression data representing a part or all of the energy function. The application unit 100 can be achieved by using, for example, the function of the expression converting unit 201 illustrated in Fig. 1.

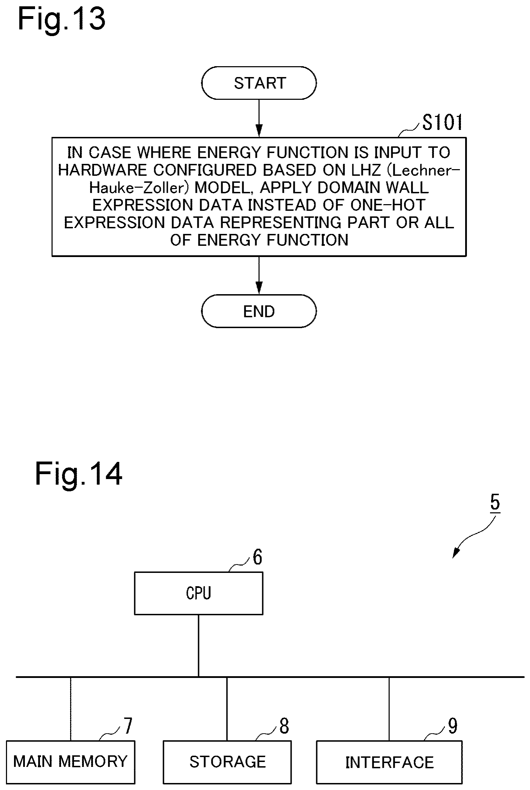

Next, processing of the processing device 1 having a minimum configuration will be described. Fig. 13 is a diagram illustrating an example of a processing flow of the processing device 1 having a minimum configuration. Here, processing of the processing device 1 having a minimum configuration will be described with reference to Fig. 13.

In a case where an energy function is input to hardware configured based on a Lechner-Hauke-Zoller (LHZ) model, the application unit 100 applies domain wall expression data instead of one-hot expression data representing a part or all of the energy function (step S101). As a result, the processing device 1 can achieve processing with less hardware resources configured based on an optimization device having a predetermined graph structure such as an LHZ model.

The order of processing in the example embodiments of the present disclosure may be changed within a range in which appropriate processing is performed.

Although the example embodiment of the present disclosure has been described, the processing device 1, the input unit 10, the control unit 20, the output unit 30, the hardware processing unit 40, and other control devices described above may include a computer device therein. The processing of the above-described processing is stored in a computer-readable recording medium in the form of a program, and the above-described processing is performed by the computer reading and executing the program. A specific example of the computer will be described below.

Fig. 14 is a schematic block diagram illustrating a configuration of a computer according to at least one example embodiment. As illustrated in Fig. 14, the computer 5 includes a central processing unit (CPU) 6, a main memory 7, a storage 8, and an interface 9. For example, each of the processing device 1, the input unit 10, the control unit 20, the output unit 30, the hardware processing unit 40, and other control devices described above is mounted on the computer 5. Then, the operation of each processing unit described above is stored in the storage 8 in the form of a program. The CPU 6 reads the program from the storage 8, develops the program in the main memory 7, and executes the above processing according to the program. In addition, the CPU 6 secures a storage area corresponding to each of the above-described storage units in the main memory 7 according to the program.

Examples of the storage 8 include a hard disk drive (HDD), a solid state drive (SSD), a magnetic disk, a magneto-optical disk, a compact disc read only memory (CD-ROM), a digital versatile disc read only memory (DVD-ROM), a semiconductor memory, and the like. The storage 8 may be an internal medium directly connected to the bus of the computer 5 or an external medium connected to the computer 5 via the interface 9 or a communication line. In addition, in a case where the program is distributed to the computer 5 through a communication line, the computer 5 that has received the distribution may develop the program in the main memory 7 and execute the above processing. In at least one example embodiment, the storage 8 is a non-transitory tangible storage medium.

In addition, the program may achieve a part of the functions described above. Furthermore, the program may be a file that can achieve the above-described functions in combination with a program already recorded in the computer device, that is, a so-called difference file (difference program).

Although some example embodiments of the present disclosure have been described, these example embodiments are examples and do not limit the scope of the disclosure. Various additions, omissions, substitutions, and changes may be made to these example embodiments within a scope not deviating from the gist of the disclosure.

Some or all of the above example embodiments may be described as the following Supplementary Notes, but are not limited to the following.

(Supplementary Note 1)

A processing device including:

hardware configured in such a way that all combinations of a specific number of two or more logical bits, which are selectable from a group of logical bits constituting a problem, are mapped to different physical bits; and an application means for applying, to the hardware when inputting an energy function of the problem, domain wall expression data instead of one-hot expression data representing a part or all of the energy function.

(Supplementary Note 2)

The processing device according to Supplementary Note 1, in which the hardware is configured based on a Lechner-Hauke-Zoller (LHZ) model.

(Supplementary Note 3)

The processing device according to Supplementary Note 1 or 2, in which the hardware obtains an optimal solution of a combinatorial optimization problem represented by the energy function based on quantum annealing or QAOA (quantum approximate optimization algorithm).

(Supplementary Note 4)

The processing device according to any one of Supplementary Notes 1 to 3, including

a determining means for determining whether it is better to apply domain wall expression data instead of the one-hot expression data, in which in a case where the determining means determines that it is better to apply the domain wall expression data instead of the one-hot expression data, the application means applies the domain wall expression data instead of the one-hot expression data.

(Supplementary Note 5)

The processing device according to Supplementary Note 4, in which the determining means determines whether it is better to apply the domain wall expression data instead of the one-hot expression data, based on a number of correlations between variables when the one-hot expression data is applied and a number of correlations between variables when the domain wall expression data is applied.

(Supplementary Note 6)

A processing method executed by a processing device having hardware, the hardware being configured in such a way that all combinations of a specific number of two or more logical bits, which are selectable from a group of logical bits constituting a problem, are mapped to different physical bits, the method including applying, to the hardware when inputting an energy function of the problem, domain wall expression data instead of one-hot expression data representing a part or all of the energy function.

(Supplementary Note 7)

The processing method according to Supplementary Note 6, in which the hardware is configured based on a Lechner-Hauke-Zoller (LHZ) model.

(Supplementary Note 8)

The processing method according to Supplementary Note 6 or 7, further including obtaining an optimal solution of a combinatorial optimization problem represented by the energy function based on quantum annealing or QAOA (quantum approximate optimization algorithm).

(Supplementary Note 9)

A recording medium having stored therein a program for causing a computer of a processing device having hardware, the hardware being configured in such a way that all combinations of a specific number of two or more logical bits, which are selectable from a group of logical bits constituting a problem, are mapped to different physical bits, to execute applying, to the hardware when inputting an energy function of the problem, domain wall expression data instead of one-hot expression data representing a part or all of the energy function.

(Supplementary Note 10)

The recording medium according to Supplementary Note 9, in which
the hardware is configured based on a Lechner-Hauke-Zoller (LHZ) model.

(Supplementary Note 11)

The recording medium according to Supplementary Note 10 or 10 having stored therein a program for causing a computer to execute
obtaining an optimal solution of a combinatorial optimization problem represented by the energy function based on quantum annealing or QAOA (quantum approximate optimization algorithm).

(Supplementary Note 12)

A processing device including
an acquisition means for acquiring data of domain wall expression data, the acquisition means having a configuration matching a number of bits of domain wall expression data included in an energy function of a problem when inputting the energy function to hardware configured in such a way that all combinations of a specific number of two or more logical bits, which are selectable from a group of logical bits constituting the problem, are mapped to different physical bits.

(Supplementary Note 13)

A processing method executed by a processing device having a configuration matching a number of bits of domain wall expression data, the method including
acquiring domain wall expression data included in an energy function in a case of inputting the energy function of a problem to hardware configured in such a way that all combinations of two or more specific numbers of logical bits, which are selectable from a group of logical bits constituting the problem, are mapped to different physical bits.

(Supplementary Note 14)

A recording medium having stored therein a program for causing a computer of a processing device, the processing device having a configuration matching a number of bits of domain wall expression data, to execute:
acquiring domain wall expression data included in an energy function in a case of inputting the energy function of a problem to hardware configured in such a way that all combinations of two or more specific numbers of logical bits, which are selectable from a group of logical bits constituting the problem, are mapped to different physical bits.

Industrial Applicability

According to each aspect of the present disclosure, it is possible to achieve processing with less hardware resources configured based on an optimization device having a predetermined graph structure such as an LHZ model.

Reference Signs List

1        processing device
5        computer
6        CPU
7        main memory
8        storage

9 interface
10 input unit
20 control unit
30 output unit
40 hardware processing unit
100 application unit
101 model input unit
102 one-hot condition input unit
201 expression converting unit
202 embedding unit
203 solving unit
204 determining unit

**Claims**

1. A processing device comprising:

   hardware configured in such a way that all combinations of a specific number of two or more logical bits, which are selectable from a group of logical bits constituting a problem, are mapped to different physical bits; and
   an application means for applying, to the hardware when inputting an energy function of the problem, domain wall expression data instead of one-hot expression data representing a part or all of the energy function.

2. The processing device according to claim 1, wherein
   the hardware is configured based on a Lechner-Hauke-Zoller (LHZ) model.

3. The processing device according to claim 1 or 2, wherein
   the hardware obtains an optimal solution of a combinatorial optimization problem represented by the energy function based on quantum annealing or QAOA (quantum approximate optimization algorithm).

4. The processing device according to any one of claims 1 to 3, comprising

   a determining means for determining whether it is better to apply domain wall expression data instead of the one-hot expression data,
   wherein in a case where the determining means determines that it is better to apply the domain wall expression data instead of the one-hot expression data, the application means applies the domain wall expression data instead of the one-hot expression data.

5. The processing device according to claim 4, wherein
   the determining means determines whether it is better to apply the domain wall expression data instead of the one-hot expression data, based on a number of correlations between variables when the one-hot expression data is applied and a number of correlations between variables when the domain wall expression data is applied.

6. A processing method executed by a processing device having hardware, the hardware being configured in such a way that all combinations of a specific number of two or more logical bits, which are selectable from a group of logical bits constituting a problem, are mapped to different physical bits, the method comprising applying, to the hardware when inputting an energy function of the problem, domain wall expression data instead of one-hot expression data representing a part or all of the energy function.

7. A recording medium having stored therein a program for causing a computer of a processing device having hardware, the hardware being configured in such a way that all combinations of a specific number of two or more logical bits, which are selectable from a group of logical bits constituting a problem, are mapped to different physical bits, to execute applying, to the hardware when inputting an energy function of the problem, domain wall expression data instead of one-hot expression data representing a part or all of the energy function.

8. A processing device comprising
   an acquisition means for acquiring data of domain wall expression data, the acquisition means having a configuration matching a number of bits of domain wall expression data included in an energy function of a problem when inputting the energy function to hardware configured in such a way that all combinations of a specific number of two or more logical bits, which are selectable from a group of logical bits constituting the problem, are mapped to different physical bits.

9. A processing method executed by a processing device having a configuration matching a number of bits of domain wall expression data, the method comprising
acquiring domain wall expression data included in an energy function in a case of inputting the energy function of a problem to hardware configured in such a way that all combinations of two or more specific numbers of logical bits, which are selectable from a group of logical bits constituting the problem, are mapped to different physical bits.

10. A recording medium having stored therein a program for causing a computer of a processing device, the processing device having a configuration matching a number of bits of domain wall expression data, to execute:
acquiring domain wall expression data included in an energy function in a case of inputting the energy function of a problem to hardware configured in such a way that all combinations of two or more specific numbers of logical bits, which are selectable from a group of logical bits constituting the problem, are mapped to different physical bits.

# Fig.1

# Fig.2

| VALUE | one-hot EXPRESSION | domain wall EXPRESSION 1 | domain wall EXPRESSION 2 |
|---|---|---|---|
| 1 | 1000 | 111 | 000 |
| 2 | 0100 | −111 | 100 |
| 3 | 0010 | −1−11 | 110 |
| 4 | 0001 | −1−1−1 | 111 |

# Fig.3

$$+A\left(\sum_{i=1}^{N} x_i - 1\right)^2 \iff -\lambda\left(-s_1 + \sum_{i=1}^{N-2} s_i s_{i+1} + s_{N-1}\right) \iff \nu\left(\sum_{i=1}^{N-1} x_{i+1}(1 - x_i)\right)$$

ONE-HOT EXPRESSION        DOMAIN WALL EXPRESSION 1        DOMAIN WALL EXPRESSION 2

Fig.4

1

INPUT UNIT 10

MODEL INPUT UNIT 101

ONE-HOT CONDITION INPUT UNIT 102

CONTROL UNIT 20

EXPRESSION CONVERTING UNIT 201

EMBEDDING UNIT 202

SOLVING UNIT 203 — HARDWARE PROCESSING UNIT 40

DETERMINING UNIT 204

OUTPUT UNIT 30

Fig.5

Fig.6

## Fig.7

## Fig.8

# Fig.9

START

↓ S1

RECEIVE ISING MODEL

↓ S2

EXPLICITLY RECEIVE SET OF VARIABLES
INCLUDED IN ONE-HOT EXPRESSION

↓ S3

IS IT BETTER TO
CONVERT MODEL FROM ONE-HOT
EXPRESSION TO DOMAIN WALL
EXPRESSION? ──── NO

YES ↓                                    ↓

S4                                       S6

EXECUTE CONVERSION          KEEP ORIGINAL
                            MODEL

↓ S5

SET VARIABLE SO AS TO MATCH
HARDWARE PROCESSING UNIT
CONFIGURED BASED ON LHZ MODEL IN
CONVERTED MODEL

↓ S7

EXECUTE PREDETERMINED CALCULATION
ON MODEL

↓ S8

OBTAIN SOLUTION

↓ S9

OUTPUT SOLUTION TO OUTSIDE OF
PROCESSING DEVICE

↓

END

## Fig.10

| | | WORKER i | | | | |
|---|---|---|---|---|---|---|
| | $w_{i,k}$ | 1 | 2 | 3 | $\cdots$ | 20 |
| WORK k | A | 12 | 8 | 11 | $\cdots$ | 10 |
| | B | 6 | 5 | 4 | $\cdots$ | 7 |
| | C | 2 | 1 | 3 | $\cdots$ | 1 |

## Fig.11

40

401

ACQUISITION UNIT

## Fig.12

1

100

APPLICATION UNIT

## Fig.13

START

S101

IN CASE WHERE ENERGY FUNCTION IS INPUT TO
HARDWARE CONFIGURED BASED ON LHZ (Lechner-
Hauke-Zoller) MODEL, APPLY DOMAIN WALL
EXPRESSION DATA INSTEAD OF ONE-HOT
EXPRESSION DATA REPRESENTING PART OR ALL
OF ENERGY FUNCTION

END

## Fig.14

5

6

CPU

7
MAIN MEMORY

8
STORAGE

9
INTERFACE

## INTERNATIONAL SEARCH REPORT

| International application No. |
| --- |
| **PCT/JP2023/010130** |

| A. | CLASSIFICATION OF SUBJECT MATTER |
| --- | --- |

*G06N 99/00*(2019.01)i; *G06N 10/60*(2022.01)i
FI:    G06N99/00 180; G06N10/60

According to International Patent Classification (IPC) or to both national classification and IPC

| B. | FIELDS SEARCHED |
| --- | --- |

Minimum documentation searched (classification system followed by classification symbols)

G06N3/00-99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2022-76900 A (NEC CORP., TOKYO INSTITUTE OF TECHNOLOGY) 20 May 2022 (2022-05-20) paragraphs [0014]-[0017], [0023]-[0026], [0039]-[0045], fig. 2, 5 | 1-3, 6-10 |
| A | | 4-5 |
| Y | 上島雄高 ほか, イジングマシンにおけるワンホットエンコーディングとドメインウォールエンコーディングの比較, 情報処理学会研究報告 量子ソフトウェア [online], 30 June 2022, vol. 2022-QS-6, no. 13, pages 1-7, [retrieved on 24 May 2023], Internet: <URL: http://id.nii.ac.jp/1001/00218664>, ISSN 2435-6492, (KAMISHIMA, Yuko et al., IPSJ SIG Technical Reports, Quantum Software), non-official translation (Comparison of one-hot encoding and domain wall encoding on Ising machines) particularly, 1. Introduction | 1-3, 6-10 |
| A | | 4-5 |
| Y | JP 2022-062274 A (BEIJING BAIDU NETCOM SCIENCE & TECNOLOGY CO., LTD.) 19 April 2022 (2022-04-19) paragraphs [0002]-[0003] | 3 |

☑ Further documents are listed in the continuation of Box C.     ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **24 May 2023** | **06 June 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
| --- |
| **PCT/JP2023/010130** |

**C. DOCUMENTS CONSIDERED TO BE RELEVANT**

| Category* | Citation of document, with indication, where appropriate, of the relevant passages | Relevant to claim No. |
| --- | --- | --- |
| A | CHANCELLOR, Nicholas, Domain wall encoding of discrete variables for quantum annealing and QAOA, arXiv.org [online], 20 July 2019, pages 1-18, [retrieved on 24 May 2023], Internet: <URL: https://arxiv.org/pdf/1903.05068v4.pdf> whole document | 1-10 |

Form PCT/ISA/210 (second sheet) (January 2015)

**INTERNATIONAL SEARCH REPORT**
Information on patent family members

International application No.

**PCT/JP2023/010130**

| Patent document cited in search report | | | Publication date (day/month/year) | Patent family member(s) | | | Publication date (day/month/year) |
|---|---|---|---|---|---|---|---|
| JP | 2022-76900 | A | 20 May 2022 | US | 2022/0147596 | A1 | |
| | | | | paragraphs [0029]-[0031], [0037]-[0039], [0051]-[0057], fig. 2, 5 | | | |
| JP | 2022-062274 | A | 19 April 2022 | US | 2022/0300848 | A1 | |
| | | | | paragraphs [0003]-[0004] | | | |
| | | | | CN | 113313261 | A | |

Form PCT/ISA/210 (patent family annex) (January 2015)

**EP 4 682 787 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021536610 A